# EUROPEAN PATENT SPECIFICATION

(11) **EP 0 564 659 B1**
(45) Date of publication and mention of the grant of the patent: **07.04.1999**
(21) Application number: 92922403.8
(22) Date of filing: 29.10.1992
(51) Int. Cl.: C01F 7/06, C01F 7/47

(54) **PROCESS FOR PRODUCING ALUMINUM HYDROXIDE FROM ALUMINA-CONTAINING ORE**
VERFAHREN ZUR HERSTELLUNG VON ALUMINIUMHYDROXID AUS ALUMINIUMOXID ENTHALTENDEN ERZEN
PROCEDE POUR LA PRODUCTION D'HYDROXYDE D'ALUMINIUM A PARTIR D'UN MINERAI CONTENANT DE L'ALUMINE

(30) Priority: 30.10.1991 JP 284648/91
(43) Date of publication of application: 13.10.1993
(73) Proprietor: SUMITOMO CHEMICAL COMPANY LIMITED, Osaka-shi, Osaka 541-0041 (JP)
(72) Inventor: HARATO, Takuo, Niihama-shi Ehime 792 (JP); ISHIDA, Takahiro, Niihama-shi Ehime 792 (JP); KUMAGAE, Yoshio, Toyonaka-shi Osaka 560 (JP); INAMI, Michikazu, Niihama-shi Ehime 792 (JP); ISHIBASHI, Kazuhisa, Niihama-shi Ehime 792 (JP); MURAKAMI, Mitsuaki, Niihama-shi Ehime 792 (JP)
(74) Representative: VOSSIUS & PARTNER
(86) International application number: JP9201397
(87) International publication number: WO9309062

(56) References cited:
- AU-A- 434 281
- DE-A- 830 945
- FR-A- 1 106 750
- FR-A- 2 360 514
- JP-A-57 145 029
- JP-A-62 230 613
- JP-A-63 190 709
- JP-B-37 008 257
- JP-B-48 037 678
- E. BARTHOLOME 'Ullmanns Encyklopädie der technischen Chemie, 4te Auflage' 1974 , VERLAG CHEMIE , WEINHEIM (DE) * page 310, right column, paragraph 2 - page 311, left column, paragraph 2; figure 9B *

## Description

The present invention relates to a process for the production of aluminum hydroxide from an ore containing alumina.

In more detail, the present invention relates to a process for the production of aluminum hydroxide, by which aluminum hydroxide can be obtained economically with a little loss of alkali, a high yield of alumina, low contamination by silica and a low unit cost of energy, even when a low quality ore containing alumina (often referred to as bauxite hereafter) with a high content of soluble silica is used as a starting material of an ore containing alumina in a process which is the so-called Bayer process for the production of aluminum hydroxide wherein bauxite is dissolved in an alkali solution and a solution of sodium aluminate there obtained is hydrolyzed to precipitate aluminum hydroxide.

A process which is most commonly employed for the production of aluminum hydroxide from bauxite is the Bayer process. This process comprises the following steps: Bauxite is treated with an alkaline solution such as an aqueous sodium hydroxide solution or an aqueous mixture solution of sodium hydroxide and sodium carbonate to make a slurry and alumina contained in bauxite is extracted as sodium aluminate (extraction step); insoluble residues such as iron oxides, silicates and titanium oxides are separated from the slurry (red mud-separation step); seeds of aluminum hydroxide is added to a clear solution of sodium aluminate after the separation of the insoluble residues so that aluminum hydroxide is precipitated at a temperature usually of 50 - 70 °C and the aluminum hydroxide there precipitated is separated from the sodium aluminate solution (separation step); and a portion of the separated aluminum hydroxide is recycle-used as the seeds and the rest of the separated aluminum hydroxide is withdrawn as a product while the sodium aluminate solution after the separation (often referred to as a decomposing solution) is recycled as it is or after condensation for the use in the bauxite-dissolving step.

Usually, bauxite contains an alkali-soluble silica (often referred to as a reactive silica or R-SiO₂), a content thereof being dependent on a place where it is mined. Accordingly, in the above extraction step, the reactive silica contained in bauxite is dissolved as well as the alumina component.

When an extract solution (sodium aluminate solution) containing the reactive silica that has been dissolved therein is subjected to the precipitation step to obtain aluminum hydroxide by the precipitation thereof, the silica in the solution is also precipitated after decomposition together with aluminum hydroxide, which causes deterioration of the quality of aluminum hydroxide obtained. Accordingly, the reactive silica in the extract solution is allowed to react with a portion of alumina and a portion of the alkaline solution so as to precipitate as sodalite or zeolite which is alkali-insoluble before entering the precipitation step (desilication step), and removed and discarded together with the iron oxides, the titanium oxides and other insoluble substances separated in the following red mud-separation step.

Conventionally, in the most common practice, a residence time in the extraction step has been made relatively so long as 30 minutes to 6 hours so as to achieve sufficient dissolution of the reactive silica and conversion of the dissolved reactive silica to desilication products before precipitated.

However, the above-described process is not economical since the soluble silica in the extracted solution is removed as the desilication products by using a large amount of alumina and the alkali as described above.

A known processes for suppressing the loss of the alkali caused by the reactive silica in bauxite includes a process described in Japanese Patent Kokoku Publication No. 8257/1962 wherein bauxite with a high content of the reactive silica can be used by dissolving the alumina component selectively with utilizing difference in the dissolution rate into a caustic alkali or sodium aluminate solution between alumina and the reactive silica in bauxite, a process described in Japanese Patent Kokoku Publication No. 37678/1973 wherein the extraction residue is separated by using a synthetic high molecular weight coagulant with suppressing dissolution of the reactive silica but allowing the alumina component to be dissolved sufficiently, and a process described in Japanese Patent Kokai Publication No. 230613/1987 wherein aluminum hydroxide is precipitated by extracting the alumina component in a tube reactor, immediately flash-cooling a mixture of the extract solution and the extraction residue, separating and removing the extraction residue, and desilicating the extract solution, from which sodium hydroxide is precipitated.

However, the process disclosed in Japanese Patent Kokoku Publication No. 8257/1962 uses two sorts of bauxite, one with a high content of the reactive silica and the other with a usual content of the reactive silica, and employs different conditions for the extraction of each bauxite. Therefore, it cannot be applied in the case in which the bauxite with the usual content of the reactive silica or the bauxite with the high content of the reactive silica is used alone.

The process of Japanese Patent Kokoku Publication No. 37678/1973 is an excellent invention in regard to rapid separation of the extraction residue, but no detailed description of the extraction of alumina is given on how efficiently dissolution of reactive silica is suppressed, and in addition no process is disclosed in order to suppress decrease in a yield of alumina.

FR-A-2 360 514 discloses a two-stream bauxite digestion method as part of the Bayer process for the preparation of aluminium oxide from bauxite ores. Described is that the liquor stream can be preheated to a temperature above the extraction temperature. Ullmanns Encyklopädie der technischen Chemie, vol 7, page 310-311 also teaches a two-stream Bayer process digestion method. JP-A-62 230 613 discloses a process for the production of aluminium hydroxide which comprises a desilication step.

In Japanese Patent Kokai Publication No. 230613/1987 is disclosed a process wherein a mixture of the extract solution and the extraction residue is flash-cooled immediately after the extraction so as to suppress the dissolution of the soluble silica from bauxite into the alkaline solution, the residue is separated off, and the extract solution is desilicated. However, it is described that, in this process, heating is carried out by directly injecting live steam into a mixing header and a tube reactor. However, in this case, a specially large evaporator is required for keeping water balance in the system, and so this process is not economical. When a mixed slurry comprising an aqueous alkaline solution such as a recycled decomposing solution and bauxite is heated to an extraction temperature by using recovered steam and live steam in the mixing header, dissolution of R-SiO₂ takes place even during the preheating before the extraction step so that suppression of the dissolution of R-SiO₂ is insufficient. In addition, since the desilication is conducted after the flash-cooling at so low a temperature of 80-110 °C, a reaction rate of the desilication is low and an extraordinary large apparatus for the desilication is required to be equipped in order to avoid contamination with silica in the product of aluminum hydroxide.

In addition, when the extract solution is kept over a long time in the desilication step so as to decrease the silica concentration to a desired one, the alumina component in the extract solution is precipitated as aluminum hydroxide simultaneously, which is disadvantage since a yield of alumina is decreased in the overall process even when the alumina extraction ratio from bauxite is high.

In view of the above-described situation, the inventors of the present invention have made extensive studies for finding a process for the economical production of aluminum hydroxide from bauxite, wherein an amount of sodium hydroxide to be lost is decreased, decrease in an alumina yield is suppressed and aluminum hydroxide with little contamination by silica is precipitated without deterioration of an energy cost, and have completed the present invention.

Thus, the present invention provides a process for the production of aluminum hydroxide from an alumina-containing ore comprising the steps of:
(a) mixing said alumina-containing ore with an alkaline solution to obtain a slurry having a solids content higher than 20 % by weight, and preheating said slurry at a temperature of 70-120 °C,
(b) mixing a preheated aqueous alkaline solution with said slurry obtained in step (a),
(c) extracting alumina contained in said mixture obtained in step (b) as sodium aluminate, in a tube reactor at a temperature of 120-160 °C within 10 minutes, to obtain a mixture of an extract solution of sodium aluminate and dissolution residues of reactive silica.
(d) immediately separating said dissolution residues from said mixture obtained in step (c), to obtain the extract solution,
(e) desilicating said extract solution to obtain a mixture of desilication product and a clear extract solution of sodium aluminate,
(f) separating said desilication product from said mixture obtained in step (e), to obtain the clear extract solution, and
(g) adding seeds of aluminum hydroxide to said clear extract solution to precipitate aluminum hydroxide,
   wherein in said alumina-containing ore 50 % or more of the alumina is alumina trihydrate and the content of reactive silica is from about 0.5 to 15 % by weight based on the total weight of the ore and
   wherein said aqueous alkaline solution in step (b) is preheated prior to mixing to achieve said extraction temperature of 120-160 °C of step (c) after mixing with the slurry of step (a), provided that the case is excluded that the slurry is heated in step a) to 120 °C and is subsequently mixed with the aqueous alkaline solution preheated to 120 °C, too.

Fig. 1 shows a flow chart of an embodiment of the process of the present invention;
Fig. 2 shows a flow chart of an embodiment of the well-known Bayer process; and
Fig. 3 shows temperature dependence of the dissolution rate coefficients of alumina and the reactive silica in bauxite into an aqueous alkaline solution.

The alumina-containing ore to be employed as a raw material in the present invention includes bauxite, laterite and other ores which contains alumina of which major crystal form is alumina trihydrate the content of alumina trihydrate is higher than about 50% by weight, and preferably higher than about 70% by weight based on the total content of alumina in the ore) and which also includes the reactive silica.

The content of the reactive silica is from about 0.5% by weight to about 15% by weight, and commonly from about 0.5% by weight to about 10% by weight based on the ore weight. When bauxite with a high content of the reactive silica is employed, the process of the present invention provides economical advantage.

In practicing the process of the present invention, bauxite as the raw material, as it is or after roughly ground, is formed into a slurry using a slurrying solution, and then charged into a preheating apparatus as it is or after wet ground as desired.

A smaller particle size of bauxite to be charged into the preheating apparatus is more preferable so as to make the difference in dissolution rate between alumina and the reactive silica greater. Since a larger Particle size generally allows easier separation in a separation step of the extract solution from the dissolution residue, a particle size of bauxite is smaller than 10 mesh, and preferably smaller than 60 mesh.

A solid content of the slurrying solution for bauxite when preheated is high enough to have a slurry that allows bauxite to be transferred, and depends on a sort, a particle size and other factors of bauxite. The solid content of the slurry is adjusted to be higher than about 20% by weight and preferably in a range of 30 to 65% by weight.

There is no specific limitation on the solution to be used for the preparation of the slurry, and the recycle-solutions used in the Bayer process such as a decomposing solution or its concentrate (often referred to as a recycled decomposing solution) and washing solutions of the dissolution residue and the precipitated aluminum hydroxide may be employed. Particularly, the washing solution for the dissolution residue is more preferable because it has a lower Na₂O concentration than that of the recycled decomposing solution and it contains a small amount of the reactive silica which is dissolved during washing the dissolution residue and works to suppress the dissolution of the reactive silica during preheating of the bauxite slurry and also because the reactive silica contained in the washing solution for the residue is removed by desilication in the following desilication step.

Depending on the sort of bauxite, a Na₂O concentration of the slurry and a type of the preheating apparatus for the slurry, an upper limit of a temperature to preheat the bauxite slurry is 120 °C and preferably about 110 °C. When the preheating temperature is higher than 120 °C, such a temperature is not desirable since it allows the reactive silica to be dissolved into the slurry during the preheating of the bauxite slurry,

Since the extraction of the reactive silica proceeds even in the course of the preheat of the bauxite slurry, a period required to preheat the slurry is set within 10 minutes and preferably within 5 minutes.

For the purpose of efficient utilization of heat by recovering heat from the slurry after the extraction, the slurry is preheated to a temperature higher than about 70°C and more preferably higher than about 80°C.

Usually, a preheating apparatus such as a double-tube heat exchanger or a shell-and-tube heat exchanger is used as the preheating apparatus for the bauxite slurry since it allows little back mixing and preheats the slurry in a short time.

There is no specific limitation on another aqueous alkaline solution which is mixed with the preheated bauxite slurry in the practice of the process of the present invention, and the recycled decomposing solution may be mainly used and in addition, an alkali-containing solution produced in other steps may be used as it is or after condensation.

These aqueous alkaline solutions are preheated in a conventional manner so as to reach the desired extraction temperature after it is mixed with the bauxite slurry. For example, they are preheated to a temperature of 150 °C to 170 °C by using recovered or live steam.

As the preheating apparatus for the aqueous alkaline solution, indirect heating-type heat exchanges such as a double-tube, a shell-and-tube and a spiral-type heat exchangers may be employed.

The preheated bauxite slurry and the preheated aqueous alkaline solution are charged into an extraction apparatus separately or after mixing together.

A mixing ratio of the preheated bauxite slurry to the preheated aqueous alkaline solution is determined depending on factors such as a sort of bauxite, a solid content of the bauxite slurry and a composition of the decomposing solution, and adjustment is carried out so as to have a molar ratio of Na₂O/Al₂O₃ of the liquid at an exit of the extraction apparatus of 1.30 - 1.60 and preferably 1.35 - 1.50.

In the present invention, the slurry is brought to an intended extraction temperature at an entrance of the extraction apparatus.

When the extraction at a higher temperature is desired, heating may comprise directly injecting some live steam into the preheated aqueous alkaline solution just before charging to the extracting apparatus.

It is well-known that there are differences in the dissolution rates of alumina and the reactive silica contained in bauxite and the formation rate of the desilication product in the aqueous alkaline solution as described in Japanese Patent Kokoku Publication No. 8257/1962 and in Japanese Patent Kokai Publication No. 230613/1987.

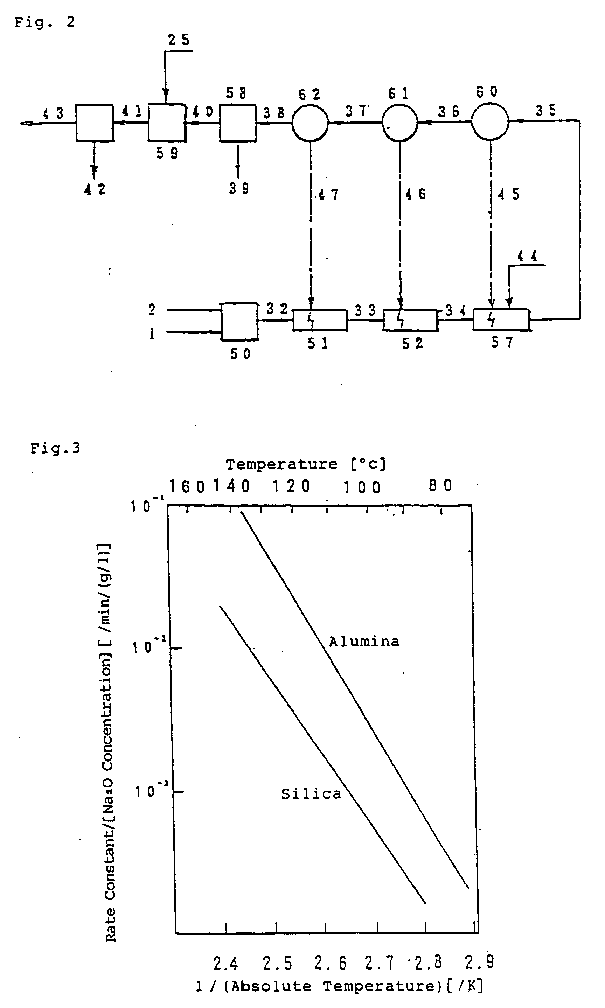

Considering the extraction rates of alumina and the reactive silica contained in bauxite in detail, it has been understood that dissolving reaction rate of each component follows a first order reaction, and on a rate constant of the reaction as shown in Fig. 3, alumina shows a higher gradient of a rate constant of the reaction than that of the reactive silica. Thus, when alumina is present in bauxite in the crystal form of alumina trihydrate (gibbsite), the alumina trihydrate is dissolved much faster than the reactive silica so that it reaches solubility equilibrium which is determined by a Na₂O concentration and a temperature; at a given Na₂O concentration, the extraction shows great temperature dependency. Accordingly, the present inventors have found that, in the process of extraction of alumina by dissolving alumina extensively from bauxite while suppressing the dissolution of the reactive silica, mixing, at the entrance of the reactor, the bauxite slurry and the aqueous alkaline solution which have been preheated separately so as to raise a temperature instantaneously to the temperature required for the dissolution of alumina is more ideal than the conventionally practiced process in which mixing an aqueous alkali solution with a slurry containing an alumina-containing ore at a high solid content and heating the mixed slurry to an extraction temperature.

The inventors have made extensive studies for finding a process that satisfies the above consideration and consequently completed the present invention by preheating, in a preheating apparatus using an indirect heating manner each of the bauxite slurry and the aqueous alkaline solution separately, mixing the preheated slurry and the preheated alkaline solution and then charging the mixture into the extraction apparatus, namely in the so-called binary fluid mode, and regulating the preheating temperature of the bauxite slurry as low as possible for suppressing the extraction of the reactive silica but so high a temperature that allows partial recovery of applied heat while regulating the preheating temperature of the aqueous alkaline solution which has no problem of the dissolution of silica, enough high to allow the mixture of the preheated binary fluid mode to reach immediately to the extraction temperature of alumina.

As an extraction apparatus of alumina, a tube reactor with little back mixing is employed adiabatically. A shape of the reactor is not particularly limited. For example, it is possible to use an thermally insulated tube which transfers the mixture to the following separation step as the reactor, so far as the binary fluid consisting of the preheated bauxite slurry and the preheated alkali solution is mixed for the extraction of alumina from bauxite.

The extraction apparatus is not required to have a heating function from its exterior, and it is recommended to raise a temperature of the slurry at the entrance of the apparatus sufficiently high so as to proceed the reaction without supplying additional heat to the reactor with aid of the thermal insulation, namely in the so-called adiabatic manner.

This is to advantageously utilize the difference between alumina and silica in their dissolution rates in to the alkaline solution. When the same quantity of heat is supplied during the same extraction time, it is more advantageous for the extraction of the same amount of alumina suppressing the dissolution of silica to have a high temperature at the entrance of the extraction apparatus and to allow the temperature to decrease from the entrance to the exit of the apparatus than to keep the temperature of the slurry constant using a heating means.

In the extraction apparatus, omission of a heating means, especially one which can supply heat from the exterior thereof eliminates reduction of the heat transfer rate due to scaling which induces a great problem when a tube reactor is employed, and is additionally effective in great reduction of the scaling in an apparatus used for preheating of the aqueous alkaline solution and the alkali-containing ore slurry.

The temperature and the time required for the extraction differ depending on the sort and the particle size of bauxite, the Na₂O and Al₂O₃ concentrations in the alkaline solution and a molar ratio of the charged bauxite and the charged alkali. The most economical conditions are determined on the basis of unit costs of bauxite and caustic soda, costs of the apparatuses, performances of the separating apparatuses, an efficiency of the desilication step and other factors. In general, the Na₂O concentration in the extracting solution is set at about 100 g/l - about 160 g/l, the extraction temperature (a temperature at the exit of the extraction apparatus) at 120 °C - 160 °C and the extraction time within 10 minutes, and preferably the extraction temperature is set at about 125 °C - about 150 °C and the extraction time within 5 minutes. At a higher extraction temperature and a longer extraction time than the above conditions, the objects of the present invention, namely to increase the extraction ratio of alumina from bauxite, to suppress the dissolution of the reactive silica and to decrease the loss of caustic soda becomes difficult to achieve.

The conditions of the extraction step are therefore set so as to make the extraction ratio of alumina from bauxite as high as possible while keeping the dissolution of the reactive silica as small as possible. It is usual to set the conditions to obtain the extraction ratio of alumina not lower than about 70%, and preferably not lower than about 80%, while achieving the dissolution ratio of silica not larger than about 70% and preferably not larger than 50%.

The slurry after the extraction of alumina is immediately transferred to a solid-liquid separation apparatus so that it is divided into the extract solution (liquid) and the dissolution residue (solid). This solid-liquid separation is carried out at almost the same temperature as the extraction temperature.

Any solid-liquid separation apparatus may be used as the solid-liquid separation apparatus in the present invention, provided that residence times of the solid and the liquid, particularly that of the dissolution residue, are short and a volume of the extract solution entrained with the residue is small. In general, a high-speed separation-type thickener and a centrifuge (a decanter) may be employed.

On the separation, it is possible to add a known coagulant, for example a polyacrylic acid-type high molecular weight coagulant, so that the separation of the slurry is accelerated. An amount of the coagulant added to the slurry may be in the known application range, and it is usually used at a ratio of about 0.005% - about 0.1% by weight based on the weight of the dissolution residue (on dry basis).

It is necessary to carry out the separation in as short a time as possible, and it is usually carried out within about 10 minutes and preferably within about 5 minutes after the extraction. The separation time, here referred to, is the residence time of the dissolution residue in the separation apparatus.

It is understood that since the solid-liquid separation temperature in the present invention is so high nearly the same as the extraction temperature, the more rapid separation of the solid and the liquid is possible in comparison with the separation in the conventional process. A longer separation time is not desirable since it allows the reactive silica to be dissolved from the residue.

The extract solution which has been separated in the solid-liquid separation step is, as it is or after indirect heating or cooling if desired, transferred to a desilication reactor (desilication step). In the desilication step, the extract solution is charged into the desilication reactor as it is or after adding seeds comprising a solid silicate substance as a major component if desired so that silica dissolved is the extract solution reacts with a portion of alumina and a portion of alkaline solution, whereby silica is converted to an insoluble silicate substance such as sodalite and zeolite.

When a raw material of bauxite has a large content of the reactive silica and thus the concentration of silica in the extract solution is higher than about 10 g/l, the desilication is initiated by nuclei spontaneously formed, but for the purpose of shortening the desilication time and improving the solid-liquid separation of the desilicated product there formed, it is desirable to add the seeds of the solid silicate substance comprising sodalite or zeolite as a major component.

There is no specific limitation on the type of the desilication reactor provided that it provides a sufficient residence time to precipitate the reactive silica from the extract solution as the desilication product. Preferably, a reactor equipped with a multi-stage agitator with little back mixing is employed.

The conditions of the desilication change by whether the heat-recovery step from the extract solution by, for example, flash evaporation is carried out before or after the desilication step, and so they cannot be fixed simply. However, the conditions are set at about 80 °C - about 160 °C of the desilication temperature and about 15 minutes - about 10 hours of the treating time, and preferably at about 115 °C - about 160 °C of the temperature and about 15 minutes - about 5 hours of the time, and more preferably at about 120 °C - 140 °C of the temperature and about 0.5 - 3 hours of the time. The higher the treating temperature is, the faster the desilication rate is and the less an amount of aluminum hydroxide precipitated during the desilication treatment is. However, since the higher treating temperature requires a pressure apparatus, the conditions of the desilication are selected from an economical view point.

After the desilication treatment, the extract solution is cooled if desired, and solid-liquid separated into the desilication product and the clear sodium aluminate solution. The solution is transferred to a precipitation step of aluminum hydroxide.

Cooling of the extract solution is carried out by using a flash evaporator or an indirect heat exchanger. When the flash evaporator is used, flashed steam is used as recovered steam to preheat the bauxite slurry and the recycled decomposing solution. When the indirect heat exchanger is used, it is also used to preheat the bauxite slurry and the recycled decomposing solution.

In the process of the present invention, the cooling of the extract solution may be carried out either immediately after the separation of the extract solution from the dissolution residue or after the desilication treatment.

The separation of the desilication product from the extract solution may be carried out by using a thickener, a centrifuge or a filter alone or optionally in combination thereof. When a portion of the separated desilication product is reused as the seeds in the desilication treatment, it is recommended to reactivate the seeds by a processing such as grinding, sieving and washing before recycling to the desilication step. Especially, it is noted that grinding the obtained desilication product by using, for example, a ball mill and using as the seeds which meet conditions, which will be described hereinafter, can greatly shorten the time required for the desilication treatment.

The desilication product used as the seeds depends on the desilication temperature, a concentration of the soluble silica in the extract solution, the desilication time and other factors. The desilication product having an average particle size of about 1 µm - about 30 µm and preferably about 5 µm - about 20 µm may be usually used as the seeds, and an amount of the seeds added may be selected from a range of about 5 g/l - about 150 g/l and preferably from that of about 20 g/l - about 100 g/l.

On the other hand, the dissolution residue which has been separated in the solid-liquid separation step in the process of this invention is cooled and washed to recover the extract solution entrained with the dissolution residue. Cooling of the residue is carried out by using a flash evaporator or an indirect heat exchanger. The flashed steam from the flash evaporation is used as the recovered steam to preheat the bauxite slurry and the recycled decomposing solution, and the recovered heat in the indirect heat exchanger is also used to preheat the bauxite slurry and the recycled decomposing solution. There is no particular limitation on the type of the apparatus to be used for washing and draining the dissolution residue. When the residue with a high soda content is washed, a high-speed thickener, a centrifuge or a filter which can prevent R-SiO₂ from dissolving out from the residue during the washing may be used alone or optionally in combination thereof.

The present invention will be, hereinafter, described in detail with reference to the accompanying drawings, but the present invention is not limited by following description.

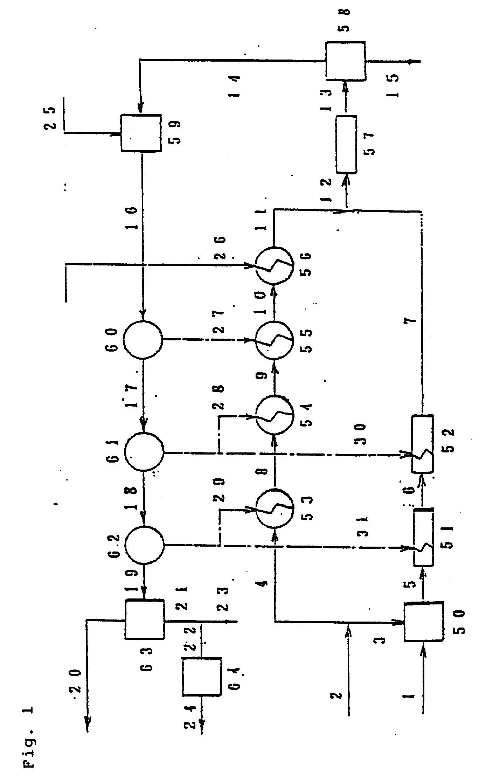

Fig. 1 shows a flow chart of an embodiment in which the process of the present invention is practiced and Fig. 2 shows a flow chart of the conventional process known as the Bayer process. In the figures, the numeral 50 stands for a slurry-preparation vessel comprising a ball mill, 51 - 55 for preheaters, 57 for an extraction apparatus, 58 for a solid-liquid separation apparatus, 59 for a desilication reaction vessel, 60 - 62 for flash evaporators for cooling, 63 for a solid-liquid separation apparatus, 64 for a grinder, 1 for a bauxite stream, 2 for a recycled decomposing solution stream and 3 - 47 for lines (conduits).

In Fig. 1, numeral 2 denotes the recycled decomposing solution, which is supplied with divided into the lines 3 and 4. Bauxite is supplied through the line 1 to the ball mill 50 and is ground and mixed, in the ball mill, together with the recycled decomposing solution supplied through the line 3 so that a transferrable slurry is prepared therefrom. Then, the slurry is transferred through the line 5 into preheaters 51 and 52 each of which usually comprises a double tube heat exchanger and each of which is so constructed that heat is supplied from the flash evaporators for cooling 62 or 61 through the lines 31 or 32, whereby the slurry is preheated to a desired temperature.

The main stream of the recycled decomposing solution through the line 4 is transferred through the lines 8, 9 and 10 into the preheaters 53, 54 and 55 each of which usually comprises a shell and tube heat exchanger and each of which is so constructed that heat is supplied from the flash evaporators for cooling 62, 61 or 60 through the lines 29, 28 or 27 whereby the stream is preheated. Then, the stream is transferred through the line 10 into the preheater 56 which usually comprises a shell and tube heat exchanger and which is so constructed that heat is supplied by live steam through the line 26 whereby the stream is further preheated. A portion of live steam through the line 26 may be fed directly into the decomposing solution, but it is preferable to use it in an indirect heating manner in the preheater 56 since water balance in the system is kept, an amount of steam consumed is decreased and a size of the evaporator small is made small. The preheating temperature in the preheater 56 is not particularly limited, and the preheating is carried out to reach the desired extraction temperature of alumina when the solution is mixed with the bauxite-containing slurry through the line 7 on the supply into the extraction apparatus.

The preheated bauxite slurry and the preheated decomposing solution are transferred through the lines 7 and 11, respectively, mixed together and supplied to the extraction apparatus 57 through the line 12.

A tube reactor with little back mixing is used as the extraction apparatus, and the extraction temperature is in a range of 120 °C - 160 °C.

In the extraction apparatus 57, the slurry in which the alumina component in the ore has been extracted as sodium aluminate is withdrawn immediately through the line 13 and fed into the solid-liquid separation apparatus 58 for the separation of the dissolution residue from the extract solution so as to prevent the dissolution of silica from the dissolution residue into the extract solution.

Any known high molecular weight coagulant may be added to the slurry that is fed into the solid-liquid separation apparatus 58 at a point of the line 13 for the purpose of the improvement of the separation efficiency.

The type of the solid-liquid separation apparatus 58 is not specifically limited provided that the solid-liquid separation is carried out in as short a time as possible, and the residence time of the dissolution residue in the apparatus is usually within about 10 minutes. Usually, a high speed separation-type thickener or a centrifuge is employed.

The slurry fed into the solid-liquid separation apparatus 58 is divided into the dissolution residue (red mud) and the extract solution, and the residue (red mud) is transferred through the line 15 to a step to treat the dissolution residue, which is discharged from the step after the recovery of heat and alkali.

On the other hand, the extract solution is introduced into the desilication reactor 59 through the line 14, where it is held until a desired amount of the silica component dissolved in the extract solution is converted to the desilication product. As the desilication reactor 59, a tank equipped with an agitating means is generally used. In the desilication treatment, a solid silicate substance is added as the seeds through line 25 for the purpose of accelerating the reaction. As the seeds, a solid silicate substance commercially available may be employed by feeding from the outside of the process, but generally the desilication product that is separated in the following step is recycle used as it is or after an activating treatment for seeds such as washing and grinding. The treatment temperature in the desilication reactor 59 is in a range of about 115 °C - about 160 °C and the treatment time is about 15 minutes - about 5 hours and preferably the temperature is about 120 °C - about 140 °C and the time is about 0.5 hour - about 3 hours. An average particle size of the desilication product to be used as the seeds is about 1 µm - about 30 µm and an amount to be added is about 5 g/l - about 150 g/l.

In the desilication reactor 59, silica dissolved in the extract solution is precipitated as the desilication product, so that the extract solution containing the desilication product of which silica concentration is lowered as desired is produced. Such an extract solution is withdrawn through the line 16, passed to the flash evaporators for cooling 60, 61 and 62 through the lines 17 and 18, cooled there and then transferred to the solid-liquid separation apparatus 63 through the line 19 for separating the desilication product.

The steam recovered in the flash evaporators for cooling 60, 61 and 62 is used for preheating the main stream of the recycled decomposing solution as above described, that is the aqueous alkaline solution, and the bauxite-containing slurry.

The slurry that is fed through the line 19 into the solid-liquid separation apparatus 63 is divided into the desilication product and the clear extract solution (sodium aluminate solution) and the desilication product is recovered from the line 23 through the line 21.

Since the desilication product thus obtained contains a little amount of impurities such as the iron oxides and the titanium oxides, it is withdrawn from the line 23 and can be used effectively for known applications such as catalysts and inorganic fillers. A portion of the desilication product is introduced into the grinder 64 to grind it to a desired particle size for reusing as the seeds in the desilication reactor 59.

The clear extract solution that has been separated in the solid-liquid separation apparatus 63 is transferred into a precipitation step (not shown) of aluminum hydroxide through the line 20. The seeds are added to the extract solution for precipitating aluminum hydroxide, which is separated while the decomposing solution separated from aluminum hydroxide is recycle used through the line 2.

Fig. 2 shows one example of the conventional Bayer process for the extraction of alumina from bauxite. In Fig. 2, the recycled decomposing solution is introduced through the line 2 into the slurry preparation vessel 50, in which bauxite introduced through the line 1 is ground so that a slurry is formed before it is transferred to the preheaters 51 and 52 and then the extraction apparatus 57 through the lines 32, 33 and 34. Heat recovered in the flash evaporators for cooling 62, 61 and 60 from the slurry after the extraction is supplied to the preheaters 51 and 52 and the extraction apparatus 57 through the lines 47, 46 and 45 as in the case of Fig. 1. Live steam is also introduced into the extraction apparatus 57 through the line 44, so that the slurry is heated to a desired temperature for the extraction of alumina, and thus alumina is extracted from bauxite. After the extraction treatment, the slurry is withdrawn through the line 35 and subjected to the heat recovery in the flash evaporators 60, 61 and 62. Then, it is fed through the line 38 into the solid-liquid separation apparatus 58 where it is divided into the extract solution and the dissolution residue. The extract solution is introduced to the desilication reactor 59 through the line 40, and introduced to the solid-liquid separation apparatus 63 through the line 41 after the desilication treatment where the clear solution of sodium aluminate is separated from the desilication product. The desilication product is withdrawn from the system through the line 42 and a portion thereof is recycle used as the seeds.

In both Figs. 1 and 2, definite numbers of the flash evaporator for cooling, the preheater of the decomposing solution and the preheater for the slurry are shown, but any desired numbers of these apparatuses may be actually employed.

### Effects of the Invention

According to the process of the present invention, the dissolution of the reactive silica can be markedly suppressed in comparison with the conventional process without substantially lowering the extraction ratio of alumina when alumina is extracted from bauxite. It is, therefore, possible to greatly decrease the loss of caustic soda and alumina which loss is caused by the removal of the dissolved reactive silica in the form of the desilication product. By employing the binary fluid mode of the indirect heating for the preheating of the slurry and the process for the alumina extraction using the adiabatic reactor (reactor without a heating means), it is also possible to decrease extensively the loss of caustic soda and alumina without the decrease of the heat transfer rate due to the scaling and without the deterioration in the energy unit which is derived from evaporation and other processings required to keep the water balance, in comparison with the conventional process in which live steam is used for heating and alumina is extracted while heated to the extracting temperature of alumina in the reactor. Furthermore, when the desilication treatment is carried out immediately after the separation of the dissolution residue, namely when the desilication treatment is applied at a high temperature before cooling the extract solution in the process of the present invention, faster desilication rate in comparison with the conventional process is allowed and thus, the desilication apparatus can be made smaller and an amount of the precipitated alumina in the desilication step is decreased. Thus, the effect of remarkably suppressing the decrease of an yield of alumina can be expected.

Thus, according to the process of the present invention, there is provided a process for the economical production of aluminum hydroxide with little contamination by silica from alumina-containing ore with high content of the reactive silica which has been difficult to be used, and therefore the industrial value of the present invention is extremely great.

### EXAMPLES

The process of the present invention will be, hereinafter, described in detail with reference to Examples, but the process of the present invention is not limited by below Examples.

### [Example 1]

By using the apparatuses shown in Fig. 1, alumina was extracted from bauxite having an analytical composition (in % by weight) as shown in Table 1.

**Table 1**

| T-SiO₂ | R-SiO₂ | T-Al₂O₃ | Fe₂O₃ | TiO₂ |
|---|---|---|---|---|
| 5.5 | 4.1 | 50.3 | 14.6 | 2.0 |

Bauxite was fed through the line 1 and the recycled decomposing solution having concentrations of 152 g/l of Na₂O and 82 g/l of Al₂O₃ was fed through the line 3 to the slurry preparation vessel 50 comprising a ball mill so as to have a slurry of which bauxite content was 600 g/l and the bauxite was ground there. Then, the slurry of the ground bauxite was preheated from 70°C to 95°C at a temperature-increasing rate of 7°C/min. using the steam recovered from the slurry after the extraction which was supplied through the lines 31 and 30 in the double-tube heat exchangers 51 and 52 having a tube diameter of 25 mm and a tube length of 360 m (51 + 52) by passing the slurry at a flow rate of 1.7 m/sec. The preheating time of the slurry was 3.5 minutes.

On the other hand, the recycled decomposing solution through the line 4 was preheated to 104°C by using the steam recovered from the slurry after the extraction which was supplied through the lines 29, 28 and 27. Furthermore, live steam was injected to the outer tube side of the double-tubes through the line 26 so as to preheat the solution to 160 °C by indirect heating.

The bauxite slurry leaving the double-tube heat exchanger 52 was introduced to the line 12 through the line 7 together with the recycled decomposing solution preheated in the shell-and-tube heat exchanger from the line 11 and the slurry and the solution were mixed. Then, the resultant mixed solution was fed into the extraction step 57 comprising the tube reactor having a tube diameter of 40 mm and a tube length of 290 m at a flow rate of 2.1 m/sec. where alumina was extracted adiabatically (without heating from the outside) in a short time.

The temperature of the slurry at the exit of the extraction step 57 was 130°C and the extraction time was 2.3 minutes.

For the purpose of measuring the extraction ratio of alumina and the dissolution ratio of R-SiO₂ from bauxite, samples of the slurry were withdrawn from a sampling port at an exit of the extraction step 57, and quenched with a flasher, and the bauxite residue was immediately separated. Based on chemical analysis of the residue, the extraction ratio of Al₂O₃ and the dissolution ratio of R-SiO₂ were calculated. The results are shown in Table 2.

### [Comparative Example 1]

Using the apparatuses shown in Fig. 2, alumina was extracted with the same recycled decomposing solution and the same bauxite as in Example 1.

The recycled decomposing solution was added to bauxite to have a bauxite concentration in the slurry of 600 g/l, and the slurry was subjected to the grinding treatment in the ball mill to have a particle size of 60 mesh. The slurry of the ground bauxite was mixed with the rest of the recycled decomposing solution and heated from 70°C to 130°C at a temperature-increasing rate of 7°C/min. in the preheaters 51, 52 and the extraction apparatus 57 which were comprised the double-tube heat exchangers having a tube diameter of 40 mm and a total tube length (51+52+57) of 1070 m by using the recovered steam through the lines 47, 46 and 45 and live steam through the line 44 so that Al₂O₃ in bauxite was extracted. In the same manner as in Example 1, the extraction ratio of alumina and the dissolution ratio of R-SiO₂ from bauxite were calculated. The results are also shown in Table 2.

### [Comparative Example 2]

With the same process as in Comparative Example 1 except that the total length of tubes of the double-tube heat exchangers was 730 m so that the residence time of the slurry in the preheaters and reactors was 5.8 min. The extraction ratio of alumina and the dissolution ratio of R-SiO₂ from bauxite were calculated. The results are shown in Table 2.

### [Comparative Example 3]

The extraction was carried out in an autoclave for 60 minutes by using the same starting extraction solution, the same bauxite, the same amount of bauxite added and the same extraction temperature as in Example 1. The extraction ratio of alumina and the dissolution ratio of R-SiO₂ from bauxite in the slurry were calculated. The results are also shown in Table 2.

**Table 2**

| | Extraction Temp. °C | Extraction Time (min.) | Extraction Ratio of Al₂O3, % | | Extraction Ratio of R-SiO₂, % | Loss of Na₂O |
|---|---|---|---|---|---|---|
| | | | Extracted | Effective | | |
| Example 1 | 130 | 3.5+2.3 | 91 | 88 | 40 | 27 |
| Comparative Example 1 | 130 | 8.5 | 92 | 88 | 47 | 31 |
| Comparative Example 2 | 130 | 5.8 | 89 | 85 | 45 | 31 |
| Comparative Example 3 | 140 | 60 | 96 | 88 | 100 | 67 |

The extraction time shown in the above table means the temperature-increasing time of the bauxite slurry and the residence time in the extraction apparatus to which the slurry was supplied.

"Extracted" in the column of the Extraction ratio of Al₂O₃ means a ratio of the extracted alumina at the exit of the extraction apparatus and "Effective" means a ratio of available alumina calculated by converting an amount of R-SiO₂ dissolved in the extract solution to an amount of the desilication product and correcting with subtracting an amount of alumina lost as the desilication product from "Extracted".

The amount of the loss of Na₂O was obtained by converting an amount of R-SiO₂ dissolved out into the extract solution to an amount of the desilication product and by calculating an amount of soda lost therefrom, and the unit is (kg/t-Al₂O₃).

### [Example 2]

The slurry leaving the tube reactor 57 of Example 1 was mixed with a high molecular weight coagulant at a ratio of 0.04% by weight based on the dissolution residue and then introduced into the high-speed thickener 58 so that the bauxite residue was immediately separated. The concentration of R-SiO₂ in the extract solution was 3 g/l.

The extract solution was fed into the desilication reactor 59, and the seeds of the desilication product of which average particle size had been beforehand adjusted to 10 µm were added in a ratio of 50 g/l and the desilication was carried out at a temperature of 126°C for 120 minutes. The desilicated slurry was introduced into the flash evaporators for cooling 60 - 62 and cooled to a temperature of 100 °C with flashing, and the desilication product was separated in the gravity solid-liquid separator 63. A portion of the desilication product was taken out for reusing as the seeds, and added to the desilication reactor at a ratio of 50 g/l after adjusting the particle size in the ball mill 64 . The rest of the desilication product was mixed with the bauxite residue which was separated in the high-speed thickener, withdrawn through the line 15 and cooled in a cooler (not shown), and the mixture was washed in a multi-stage counter current washer (not shown) so as to recover sodium aluminate attaching to the residue. The extract solution separated in the solid-liquid separator 63 was transferred into a clarifying filter (not shown) through the line 20 for clarifying filtration, and then introduced into a precipitation step so that aluminum hydroxide was precipitated. The concentration of R-SiO₂ in the extract solution leaving the solid-liquid separator 63 was 0.6 g/l which means that the desilication was carried out satisfactorily.

### [Comparative Example 4]

The slurry leaving the shell-and-tube reactor of in Comparative Example 1 was fed into the flash evaporators 60 - 62 and quenched to a temperature of 100 °C. The same amount of the same coagulant as in Example 2 was added to the cooled slurry and the mixture was immediately divided into the extract solution and the bauxite residue in the high-speed thickener 58. The extract solution was introduced into the desilication reactor 59 and, the seeds of the desilication product of which average particle size was beforehand adjusted to 10 µm were added to the extract solution in a ratio of 50 g/l. The desilication was carried out at a temperature of 100 °C for 750 minutes. Then, the extract solution after the desilication treatment was fed to the gravity solid-liquid separator 63 through the line 41 where the desilication product was separated. A portion of the product was taken out and recycled as the seeds to the desilication reactor 59 after the adjustment of the particle size. The rest of the desilication product was taken out through the line 42 and mixed with the bauxite which was separated in the high-speed thickener 58 and withdrawn through the line 39, and the resultant mixture was washed in a multi-stage counter current washer (not shown) for recovering sodium aluminate attaching to the residue. The extract solution separated in the solid-liquid separator 63 was introduced into a clarifying filter (not shown) through the line 43 for clarifying filtration, and fed into the precipitation step so that aluminum hydroxide was precipitated.

The concentration of R-SiO₂ in the extract solution leaving the solid-liquid separator 63 was 0.6 g/l, which indicates that the desilication was carried out satisfactorily. (In the above conventional process shown in Fig. 2, though the high-speed thickener was used as the solid-liquid separator 58 and the desilication product was activated by grinding in the ball mill, these are only for the reasonable comparison in the effects with Example 1, but not mean that, in the conventional process, the high-speed thickener has been employed as the solid-liquid separator 58 nor that the desilication product has been activated to make the seeds in the ball mill.)

The operation conditions in each step in Example 2 and Comparative Example 4 are shown in Table 3. The extraction ratio of Al₂O₃ and the dissolution ratio of R-SiO₂ calculated from the chemical analyses on the dissolution residue sampled from the exit of the tube reactor 57 and the bauxite residue sampled from the exit of the residue washer are shown in Table 4.

**Table 3**

| | Example 2 | Comparative Example 4 |
|---|---|---|
| Bauxite Slurry: | | |
| Preheat temp. (°C) | 70 → 95 | 70 → 130 |
| Extraction temp. (°C) | 130 | 130 |

| Residence Time: | | |
|---|---|---|
| Preheat Part (min.) | 3.5 | 8.5 |
| Extract Step (min.) | 2.5 | 0 |

| Liquid Composition at Exit of Extraction Step: | | |
|---|---|---|
| Na₂O (g/l) | 136 | 136 |
| Al₂O₃ (g/l) | 160 | 160 |
| Na₂O/Al₂O₃ (molar ratio) | 1.40 | 1.40 |
| SiO₂ (g/l) | 3 | 3 |

| Liquid Composition in Desilication Reactor: | | |
|---|---|---|
| Na₂O (g/l) | 133 | 138 |
| Al₂O₃ (g/l) | 156 | 158 |
| Na₂O/Al₂O₃ (molar ratio) | 1.40 | 1.44 |
| SiO₂ (g/l) | 0.6 | 0.6 |

| Desilication Conditions: | | |
|---|---|---|
| Temperature (°C) | 126 | 100 |
| Time (min.) | 120 | 750 |
| Amount of Seeds (g/l) | 50 | 50 |

**Table 4**

| Extraction and Dissolution Ratios | Example 2 | Comparative Example 4 |
|---|---|---|
| At Exit of Extraction Apparatus (alumina) (%) | 91 | 92 |
| At Exit of Multi-stage Counter-current Washer (alumina) (%) | 88 | 84 |
| At Exit of Extraction Apparatus (R-SiO₂) (%) | 40 | 47 |
| At Exit of Multi-stage Counter-current Washer (R-SiO₂)(%) | 45 | 52 |

Table 4 shows that the extraction ratio of alumina at the exit of the multi-stage counter current washer in Comparative Example 4 was smaller by 4% than that of Example 2. This is due to the loss of alumina caused by its precipitation in the desilication step.

### [Example 3]

In Example 2, a portion of the desilication product was ground in the ball mill 64 so as to reuse as the seeds and then recycled to the desilication reactor. The variation of the concentration of R-SiO₂ in the extract solution depending on the particle size of the seeds and recycling times was studied. The results are shown in Table 5.

### [Comparative Example 5]

In Example 2, a portion of the desilication product was reused as the seeds without grinding as in Example 3. The desilication product was recycled to the desilication reactor, and the variation of the concentration of R-SiO₂ in the extract solution depending on the particle size of the seeds and the recycling times was studied. The results are included in Table 5.

**Table 5**

| Recycle Time of Seeds | | Example 3 | Comparative Example 5 |
|---|---|---|---|
| 1 | Average Particle Size of Seeds (µm) | 10 | 11 |
| | Specific Surface Area (m²/g) | 2 | 2 |
| | R-SiO₂ in Extract Solution g/l | 0.6 | 0.6 |
| 5 | Average Particle Size of Seeds (µm) | 10 | 14 |
| | Specific Surface Area (m²/g) | 2 | 1.1 |
| | R-SiO₂ in Extract Solution (g/l | 0.6 | 0.8 |
| 30 | Average Particle Size of Seeds (µm) | 10 | 35 |
| | Specific Surface Area (m²/g) | 2 | 0.2 |
| | R-SiO₂ in Extract Solution (g/l) | 0.6 | 1.2 |

## Claims

1. A process for producing aluminum hydroxide from an alumina-containing ore which comprises the steps of:
(a) mixing said alumina-containing ore with an alkaline solution to obtain a slurry having a solids content higher than 20 % by weight, and prehating said slurry at a temperature of 70-120 °C,
(b) mixing a preheated aqueous alkaline solution with said slurry obtained in step (a),
(c) extracting alumina contained in said mixture obtained in step (b) as sodium aluminate, in a tube reactor at a temperature of 120-160 °C within 10 minutes, to obtain a mixture of an extract solution of sodium aluminate and dissolution residues of reactive silica.
(d) immediately separating said dissolution residues from said mixture obtained in step (c), to obtain the extract solution,
(e) desilicating said extract solution to obtain a mixture of desilication product and a clear extract solution of sodium aluminate,
(f) separating said desilication product from said mixture obtained in step (e), to obtain the clear extract solution, and
(g) adding seeds of aluminum hydroxide to said clear extract solution to precipitate aluminum hydroxide,
wherein in said alumina-containing ore 50 % or more of the alumina is alumina trihydrate and the conent of reactive silica is from about 0.5 to 15 % by weight based on the total weight of the ore and
wherein said aqueous alkaline solution in step (b) is preheated prior to mixing to achieve said extraction temperature of 120-160 °C of step (c) after mixing with the slurry of step (a),
provided that the case is excluded that the slurry is heated in step a) to 120 °C and is subsequently mixed with the aqueous alkaline solution preheated to 120 °C, too.

2. The process according to claim 1, wherein step (c) is carried out within 5 minutes.

3. The process according to claim 1 or 2, wherein step (c) is carried out at a temperature of 125-150 °C.

4. The process according to claim 1, 2 or 3, wherein the extraction ratio of alumina is not less than about 70 % and the dissolution ratio of the reactive silica is not greater than about 70 %.

5. The process according to claim 4, wherein the extraction ratio of alumina is not less than about 80 % and the dissolution ratio of the reactive silica is not greater than about 50 %.

6. The process according to any one of claims 1 to 5, wherein said slurry obtained in step (a) is preheated to a temperature of 80-110 °C, prior to mixing with said aqueous alkaline solution in step (b).

7. The process according to any one of claims 1 to 6, further comprising the step of:
(h) grinding said desilication product separated in step (f),
wherein step (e) comprises adding said ground desilication product obtained in step (h) and desilicating said extract solution to obtain the mixture of the desilication product and the clear extract solution of sodium aluminate.

8. The process according to any of claims 1 to 7, wherein 70 % or more of the alumina in said alumina-containing ore is alumina trihydrate.

9. The process according to any of claims 1 to 8, wherein the content of reactive silica in said alumina-containing ore is from about 0.5 to 10 % by weight based on the total weight of the ore.

10. The process according to any one of claims 1 to 9, wherein the solid content of the slurry is 30 to 65 % by weight.

11. The process according to any one of claims 1 to 10, wherein said extract solution is desilicated at a temperature of about 80 to 160 °C for about 15 minutes to 10 hours.

12. The process according to claim 11, wherein said extract solution is desilicated at a temperature of about 115 to 160 °C for about 15 minutes to 5 hours.

13. The process according to claim 12, wherein said extract solution is desilicated at a temperature of about 120 to 140 °C for about 0.5 to 3 hours.

## Patentansprüche

1. Verfahren zur Herstellung von Aluminiumhydroxid aus einem Aluminiumoxid enthaltenden Erz, umfassend die folgenden Schritte:
(a) Mischen des Aluminiumoxid enthaltenden Erzes mit einer alkalischen Lösung, um eine Aufschlämmung mit einem Feststoffgehalt von mehr als 20 Gew.-% zu erhalten, und Vorerhitzen der Aufschlämmung bei einer Temperatur von 70 bis 120°C,
(b) Mischen einer vorerhitzten wäßrigen alkalischen Lösung mit der in Schritt (a) erhaltenen Aufschlämmung,
(c) Extraktion von Aluminiumoxid, das in dem in Schritt (b) erhaltenen Gemisch enthalten ist, als Natriumaluminat in einem Röhrenofen bei einer Temperatur von 120 bis 160°C innerhalb von 10 Minuten, um ein Gemisch einer Extraktlösung von Natriumaluminat und von Lösungsrückständen von reaktivem Siliciumdioxid zu erhalten,
(d) sofortige Trennung der Lösungsrückstände von dem in Schritt (c) erhaltenen Gemisch, um eine Extraktlösung zu erhalten,
(e) Desilifizierung der Extraktlösung, um ein Gemisch eines Desilifizierungsprodukts und einer klaren Extraktlösung von Natriumaluminat zu erhalten,
(f) Trennung des Desilifizierungsprodukts von dem in Schritt (e) erhaltenen Gemisch, um die klare Extraktlösung zu erhalten, und
(g) Hinzufügung von Keimkristallen von Aluminiumhydroxid zu der klaren Extraktlösung zur Fällung von Aluminiumhydroxid,
wobei in dem Aluminiumoxid enthaltenden Erz 50 % oder mehr des Aluminiumoxids Aluminiumoxidtrihydrat ist und der Gehalt an reaktivem Siliciumdioxid etwa 0,5 bis 15 Gew.-%, basierend auf dem Gesamtgewicht des Erzes, beträgt, und
wobei die wäßrige alkalische Lösung von Schritt (b) vor dem Mischen vorerhitzt wird, um die Extraktionstemperatur von 120 bis 160°C von Schritt (c) nach dem Mischen mit der Aufschlämmung von Schritt (a) zu erreichen,
mit der Maßgabe, daß der Fall ausgeschlossen wird, bei dem die Aufschlämmung in Schritt (a) auf 120°C erhitzt wird und anschließend mit der wäßrigen alkalischen Lösung, die auch auf 120°C vorerhitzt ist, vermischt wird.

2. Verfahren nach Anspruch 1, wobei Schritt (c) innerhalb von 5 Minuten ausgeführt wird.

3. Verfahren nach Anspruch 1 oder 2, wobei Schritt (c) bei einer Temperatur von 125 bis 150°C ausgeführt wird.

4. Verfahren nach einem der Ansprüche 1, 2 oder 3, wobei der Extraktionsanteil von Aluminiumoxid nicht weniger als etwa 70 % ist und der Lösungsanteil des reaktiven Siliciumdioxids nicht größer als etwa 70 % ist.

5. Verfahren nach Anspruch 4, wobei der Extraktionsanteil von Aluminiumoxid nicht weniger als etwa 80 % ist und der Lösungsanteil des reaktiven Siliciumdioxids nicht größer als etwa 50 % ist.

6. Verfahren nach einem der Ansprüche 1 bis 5, wobei die in Schritt (a) erhaltene Aufschlämmung auf eine Temperatur von 80 bis 110°C vor dem Mischen mit der wäßrigen alkalischen Lösung in Schritt (b) vorerhitzt wird.

7. Verfahren nach einem der Ansprüche 1 bis 6, weiter umfassend den Schritt:
(h) Vermahlen des in Schritt (f) abgetrennten Desilifizierungsprodukts,
wobei Schritt (e) die Zugabe von dem in Schritt (h) erhaltenen gemahlenen Desilifizierungsprodukts und die Desilifizierung der Extraktlösung umfaßt, um das Gemisch des Desilifizierungsprodukts und der klaren Extraktlösung von Natriumaluminat zu erhalten.

8. Verfahren nach einem der Ansprüche 1 bis 7, wobei 70 % oder mehr des Aluminiumoxids in dem Aluminiumoxid enthaltenden Erz Aluminiumoxidtrihydrat ist.

9. Verfahren nach einem der Ansprüche 1 bis 8, wobei der Gehalt an reaktivem Siliciumdioxid in dem Aluminiumoxid enthaltenen Erz etwa 0,5 bis 10 Gew.-%, basierend auf dem Gesamtgewicht des Erzes, beträgt.

10. Verfahren nach einem der Ansprüche 1 bis 9, wobei der Feststoffgehalt der Aufschlämmung 30 bis 65 Gew.-% beträgt.

11. Verfahren nach einem der Ansprüche 1 bis 10, wobei die Extraktlösung bei einer Temperatur von etwa 80 bis 160°C etwa 15 Minuten bis 10 Stunden desilifiziert wird.

12. Verfahren nach Anspruch 11, wobei die Extraktlösung bei einer Temperatur von etwa 115 bis 160°C etwa 15 Minuten bis 5 Stunden desilifiziert wird.

13. Verfahren nach Anspruch 12, wobei die Extraktlösung bei einer Temperatur von etwa 120 bis 140°C etwa 0,5 bis 3 Stunden desilifiziert wird.

## Revendications

1. Procédé pour la production d'hydroxyde d'aluminium à partir d'un minerai contenant de l'alumine, comprenant les étapes consistant à :
(a) mélanger ledit minerai contenant de l'alumine avec une solution alcaline pour obtenir une suspension ayant une teneur en extrait sec supérieure à 20 % en poids, et préchauffer ladite suspension à une température de 70 à 120°C,
(b) mélanger une solution aqueuse alcaline préchauffée avec ladite suspension obtenue dans l'étape (a),
(c) extraire l'alumine contenue dans ledit mélange obtenu dans l'étape (b) sous la forme d'aluminate de sodium, dans un réacteur tubulaire à une température de 120 à 160°C en l'espace de 10 minutes, pour obtenir un mélange d'une solution d'extrait d'aluminate de sodium et de résidus de dissolution de silice réactive,
(d) immédiatement séparer lesdits résidus de dissolution d'avec ledit mélange obtenu dans l'étape (c), pour obtenir la solution d'extrait,
(e) soumettre ladite solution d'extrait à une désilication pour obtenir un mélange de produit de désilication et d'une solution d'extrait limpide d'aluminate de sodium,
(f) séparer ledit produit de désilication d'avec ledit mélange obtenu dans l'étape (e), pour obtenir la solution d'extrait limpide, et
(g) ajouter des germes d'hydroxyde d'aluminium à ladite solution d'extrait limpide pour précipiter l'hydroxyde d'aluminium,
dans lequel, dans ledit minerai contenant de l'alumine, 50 % ou plus de l'alumine sont constitués d'alumine trihydratée et la teneur en silice réactive est d'environ 0,5 à 15 % en poids par rapport au poids total du minerai, et dans lequel ladite solution aqueuse alcaline de l'étape (b) est préchauffée avant mélange pour atteindre ladite température d'extraction de 120 à 160°C de l'étape (c) après mélange avec la suspension de l'étape (a), avec exclusion du cas où la suspension est chauffée dans l'étape (a) à 120°C et est ensuite mélangée avec la solution aqueuse alcaline préchauffée également à 120°C.

2. Procédé selon la revendication 1, dans lequel l'étape (c) est réalisée en l'espace de 5 minutes.

3. Procédé selon la revendication 1 ou 2, dans lequel l'étape (c) est réalisée à une température de 125 à 150°C.

4. Procédé selon la revendication 1, 2 ou 3, dans lequel le taux d'extraction d'alumine n'est pas inférieur à environ 70 % et le taux de dissolution de la silice réactive n'est pas supérieur à environ 70 %.

5. Procédé selon la revendication 4, dans lequel le taux d'extraction d'alumine n'est pas inférieur à environ 80 % et le taux de dissolution de la silice réactive n'est pas supérieur à environ 50 %.

6. Procédé selon l'une quelconque des revendications 1 à 5, dans lequel ladite suspension obtenue dans l'étape (a) est préchauffée à une température de 80 à 110°C avant mélange avec ladite solution aqueuse alcaline dans l'étape (b).

7. Procédé selon l'une quelconque des revendications 1 à 6, comprenant en outre l'étape consistant à :
(h) broyer ledit produit de désilication séparé dans l'étape (f),
dans lequel l'étape (e) comprend l'addition dudit produit de désilication broyé obtenu dans l'étape (h) et la désilication de ladite solution d'extrait pour obtenir le mélange du produit de désilication et de la solution d'extrait limpide d'aluminate de sodium.

8. Procédé selon l'une quelconque des revendications 1 à 7, dans lequel 70 % ou plus de l'alumine dans ledit minerai contenant de l'alumine sont constitués d'alumine trihydratée.

9. Procédé selon l'une quelconque des revendications 1 à 8, dans lequel la teneur en silice réactive dans ledit minerai contenant de l'alumine est d'environ 0,5 à 10 % en poids par rapport au poids total du minerai.

10. Procédé selon l'une quelconque des revendications 1 à 9, dans lequel la teneur en extrait sec de la suspension est de 30 à 65 % en poids.

11. Procédé selon l'une quelconque des revendications 1 à 10, dans lequel ladite solution d'extrait est soumise à une désilication à une temperature d'environ 80 à 160°C pendant environ 15 minutes à 10 heures.

12. Procédé selon la revendication 11, dans lequel ladite solution d'extrait est soumise à une désilication à une température d'environ 115 à 160°C pendant environ 15 minutes à 5 heures.

13. Procédé selon la revendication 12, dans lequel ladite solution d'extrait est soumise à une désilication à une température d'environ 120 à 140°C pendant environ 0,5 à 3 heures.
